# FASCICULE DE BREVET EUROPEEN

(11) **EP 2 823 255 B1**
(45) Date de publication et mention de la délivrance du brevet: **13.04.2016**
(21) Numéro de dépôt: 13712842.7
(22) Date de dépôt: 26.02.2013
(51) Int. Cl.: G06K 9/32, G06T 19/00, H04M 1/725, G01C 21/20, H04W 4/02, H04N 21/234, H04N 21/258, H04N 21/414, H04N 21/4223, H04N 21/4722, H04N 21/658, H04W 4/04, G06F 17/30, H04N 21/81

(54) **PROCEDE DE COMMUNICATION ET D'INFORMATIONS EN REALITE AUGMENTEE**
KOMMUNIKATIONS- UND INFORMATIONSVERFAHREN IN EINER ERWEITERTEN REALITÄT
METHOD OF COMMUNICATION AND OF INFORMATION IN AUGMENTED REALITY

(30) Priorité: 07.03.2012 FR 1252051
(43) Date de publication de la demande: 14.01.2015
(73) Titulaire: ALCATEL LUCENT, 92100 Boulogne-Billancourt (FR)
(72) Inventeur: PLASSE, Stéphanie, F-91620 Nozay (FR); AFONSO, Jose, F-78141 Velizy (FR); LEFEBVRE-MAZUREL, Stéphane, F-78141 Velizy (FR); POUPEL, Olivier, F-35000 Rennes (FR); DUFOSSE, Stéphane, F-91620 Nozay (FR)
(74) Mandataire: Berthier, Karine
(86) Numéro de dépôt international: PCT/FR2013/050381
(87) Numéro de publication internationale: WO 2013/132171

(56) Documents cités:
- EP-A1- 1 712 879
- US-A1- 2008 137 912
- US-A1- 2011 071 757
- US-B1- 8 131 118

## Description

L'invention a trait au domaine des télécommunications.

Les technologies de communications de troisième génération (3G) ont permis d'intégrer aux réseaux de mobiles un certain nombre de services multimédia. Grâce par ailleurs à l'augmentation de la puissance des terminaux mobiles, des applications logicielles évoluées peuvent y être implémentées, telle que la navigation par satellite associée à des services interactifs de type informatif ou publicitaire.

A titre d'illustration, on pourra notamment se référer au brevet américain US 7 576 644 qui décrit un procédé suivant lequel des informations relatives à un lieu physique donné sont fournies à un terminal mobile localisé par GPS.

On pourra se référer également à la demande de brevet US 2011/071757 A1, qui décrit un procédé de réalité augmentée suivant lequel des informations relatives à des points d'intérêt sont superposées sur une image de l'environnement de l'utilisateur.

Le développement de terminaux mobiles équipés de caméras numériques, de puces GPS, d'accéléromètres et de compas électroniques a ouvert la voie à de nouvelles applications à la réalité augmentée. Plusieurs navigateurs en réalité augmentée sont apparus sur le marché, en particulier Argon, Wikitude, Layar, ainsi que diverses applications (UrbanSpoon, Bionic Eye, Tonchidot).

L'application Argon a été développée par le Georgia Institue of Technology, avec le soutien de la demanderesse. Implémentation du projet Kharma, Argon combine les standards KML et HTML5 et présente de nombreux avantages, notamment en termes d'interactivité et de personnalisation des objets virtuels. Pour une présentation d'Argon, on peut se reporter à l'adresse *http:*//*argonbrowser.org.*

L'application Wikitude développée par la société Mobilizy (*http:*//*www.wikitude.org*) résulte de l'intégration de Wikipédia, du système d'exploitation mobile Android de la société Google et du Smartphone G1 du constructeur HTC. L'application Wikitude permet d'ajouter des informations provenant de Wikipédia sur l'image filmée par le terminal mobile géo-localisé.

L'application Layar permet aux utilisateurs de l'application Android d'ajouter des informations et des points d'intérêts, mais ne permet pas la création de POI directement au sein du code source. Les principes de fonctionnement de Layar sont les suivants : l'utilisateur sélectionne un sujet dans une liste, puis requiert des informations sur ce sujet auprès d'un serveur (GET request), en adressant au serveur des informations de localisation. En réponse, le serveur rassemble les POI pour le sujet choisi au voisinage de la localisation et les adresse au terminal (sous le forme d'un document au format JSON), l'affichage des POI étant effectué en overlay, la bonne orientation des objets virtuels sur les objets réels étant obtenue notamment par la détection de l'orientation du terminal (par exemple compas d'un terminal mobile).

L'invention vise notamment à offrir un procédé et un système de communication et d'informations tenant compte des centres d'intérêt d'un utilisateur d'un terminal mobile géo localisé.

A cet effet, l'invention propose en premier lieu un procédé de communication selon la revendication 1 annexée.

Par « *terminal mobile* », on désigne ici notamment un téléphone mobile, un *smartphone,* un PDA (*personal digital assistant),* une tablette électronique ou un terminal électronique associé à un véhicule.

L'expression « *prise de vue* » désigne la capture d'une image, cette capture pouvant être une photo. Avantageusement, la prise de photo n'est pas nécessaire et il suffit de placer une caméra connectée au terminal mobile pour la prise de vue. Il est entendu que cette capture d'image pourrait être remplacée par une capture de son, l'analyse de l'image capturée étant remplacée par une reconnaissance de sons. Il est entendu également que l'image peut être capturée d'un contenu imprimé ou non imprimé, notamment d'un flux vidéo.

L'expression « *environnement du terminal* » désigne notamment les éléments physiques placés au voisinage du terminal et dont l'image peut être captée par le terminal, par exemple bâtiments, panneau publicitaire ou d'informations, abribus.

Le terme « *objet* » désigne avantageusement un code barre ou autres code en une dimension délivrant une information, un tag, (code QR (quick response), datamatrix, microsofttag) et autres codes en deux dimensions, une image telle que publicité extérieure, publicité imprimée dans les magazines, publicité diffusée sur écran.

Par « *lieu associé à l'objet* » on désigne ici notamment un point d'intérêt (POI point of interest), par exemple un point de présentation ou de vente de produits ou services d'une entreprise, l'objet contenant un codage de l'entreprise ou d'une marque de fabrique. Par exemple, l'objet est un tag codant une marque commerciale de restaurants franchisés et le lieu associé à l'objet est le restaurant le plus proche de l'emplacement du terminal mobile.

La localisation du terminal mobile est avantageusement prise en compte pour l'affichage du lieu associé à l'objet et de l'information associée à l'objet.

Par « *information associée à l'objet* » on désigne ici notamment une offre promotionnelle (par exemple des coupons, bons de réduction, points de fidélité, cartes mixtes pouvant être utilisées en cartes de crédit et cartes bancaires).

Ainsi qu'il apparaîtra plus complètement dans la suite de la description, si l'invention trouve applications dans le marketing mobile géo-localisé, des applications non commerciales sont tout autant possibles.

Ainsi par exemple, l'objet peut être un tag placé sur un élément de machine industrielle, l'information associée à l'objet étant une présentation technique des caractéristiques de l'élément de machine, pour la machine gé-localisée.

Dans certaines mises en oeuvre, l'information associée à l'objet est indépendante de la localisation de l'objet et du terminal. Par exemple, l'objet est une copie d'une oeuvre d'art, le lieu affiché sur le terminal mobile est la localisation du musée dans lequel se trouve actuellement l'original de l'oeuvre d'art et l'information associée à l'objet est une courte présentation de l'artiste. Suivant un autre exemple, l'objet est un logo, le lieu affiché sur le terminal mobile est la localisation d'un centre commercial dans lequel des produits portant ce logo peuvent être vus et l'information associée à l'objet est une courte présentation de ces produits.

Dans d'autres mises en oeuvre, l'information associée à l'objet est dépendante de la localisation de l'objet et/ou du terminal. Par exemple, l'information est liée à un lieu situé à proximité de l'emplacement de l'objet et/ou du terminal. Pour un même objet, par exemple le logo d'une marque ou un tag, une l'information associée à l'objet, par exemple une offre promotionnelle ou une publicité, sera différente suivant la localisation de l'objet et/ou du terminal. A titre d'exemple, l'objet est une enseigne, le lieu affiché sur le terminal est l'emplacement d'un magasin franchisé et l'information associée à l'objet est une présentation en français de ce magasin, lorsque le terminal est localisé en France.

Selon diverses réalisations, l'objet identifié est choisi dans le groupe comprenant les codes barres, les tags, les publicités extérieures, les publicités imprimées dans les magazines, les publicités diffusées sur écran.

La localisation du terminal peut être obtenue notamment par GPS. Dans une mise en oeuvre, l'objet placé dans l'environnement du terminal mobile, par exemple un tag, code une information de localisation de l'objet.

Le terme *« publicité* » ne doit pas être entendu au sens de message de promotion de produits et services marchands mais désigne ici également la promotion et l'information de services et produits non marchands et non commerciaux. Le terme « publicité » employé ici désigne également l'information institutionnelle, éducative, culturelle ou civique.

Avantageusement, l'affichage sur le terminal d'au moins un lieu associé à l'objet est réalisé en réalité augmentée. Avantageusement, la réalité augmentée permet la superposition de POI (*Point Of Interest*) sur la capture vidéo d'un terminal mobile.

Dans une réalisation, le procédé comprend une étape d'activation d'une procédure de guidage à partir de ladite localisation jusqu'à au moins un lieu associé audit objet.

L'invention se rapporte, selon un deuxième aspect, à un système de communication suivant la revendication 6 annexée.

L'analyse de la prise de vue pour l'identification d'un objet peut être effectuée au sein d'un système de communication distant, ou au sein du terminal mobile à l'aide d'une application embarquée provenant d'un serveur d'applications.

Dans une mise en oeuvre, le serveur de localisation est configuré pour activer à distance, dans le terminal, une application de navigation d'un système de positionnement par satellite implémenté dans le terminal.

Avantageusement, le système comprend des petites cellules pour la localisation de terminaux mobiles, notamment à l'intérieur de bâtiments, par exemple des gares, centres commerciaux, aéroports. Ces petites cellules sont par exemple du type femtocell lightRadio® de la demanderesse.

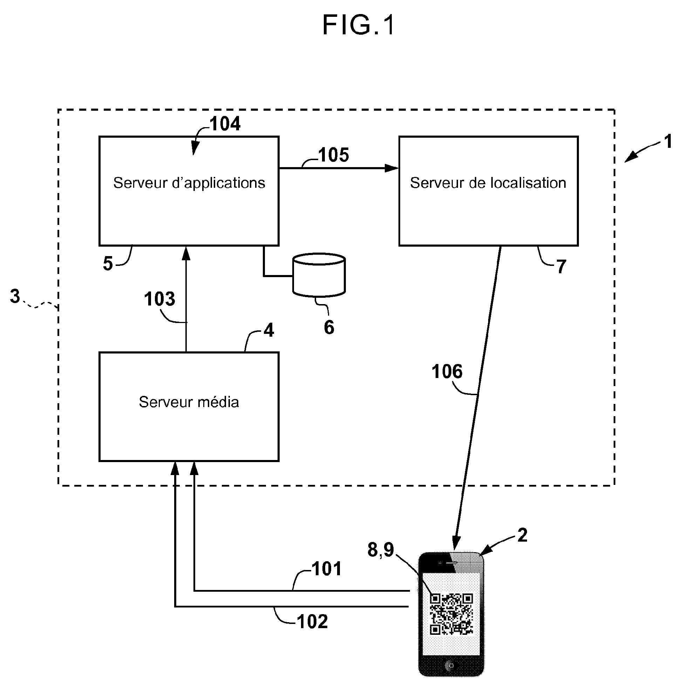

D'autres objets et avantages de l'invention apparaîtront à la lumière de la description faite ci-après en référence au dessin annexé qui illustre un système de communication et un procédé de communication conformes à l'invention.

Dans la description suivante, l'analyse de prise de vue et la détection de la présence d'un objet dans cette prise de vue sont effectuées au sein d'un système de communication distant.

Il est entendu toutefois que l'analyse de la prise de vue et la détection de la présence d'un objet dans cette prise de vue peuvent être effectuées, dans d'autres mises en oeuvre, au sein du terminal mobile, à l'aide d'une application embarquée.

Il est entendu également que l'analyse de la prise de vue et la détection de la présence d'un objet peuvent être effectuées pour partie au sein du terminal mobile et pour partie au sein d'un système de communication distant.

Sur le dessin est représentée une architecture réseau **1** comprenant un terminal **2** mobile (téléphone mobile, PDA communicant, tablette numérique, Smartphone, terminal électronique relié à un véhicule), relié, via l'interface air, à un système **3** de communication comprenant un serveur média **4,** qui assure l'établissement de sessions médias avec le terminal **2,** un serveur **5** d'applications vidéo, relié au serveur média **4** et sur lequel est avantageusement implémentée une application de réalité augmentée, une base de données **6** reliée ou intégrée au serveur **5** d'applications vidéo et dans laquelle sont mémorisées des images d'objets et les coordonnées géographiques de lieux associés à ces objets, ainsi qu'un serveur **7** de localisation relié au serveur **5** d'applications vidéo et programmé pour localiser le terminal **2.**

Le serveur média **4** et le terminal mobile **2** sont configurés pour établir entre eux des sessions médias (par exemple suivant le protocole RTP ou H324m), permettant notamment l'échange de données vidéo.

Le terminal mobile **2** est équipé d'une caméra permettant de réaliser des prises de vue (photos, vidéo) de l'environnement du terminal **2.**

Le terminal mobile **2** est en outre équipé d'un écran **8** permettant l'affichage d'images et de vidéo, ainsi que d'un système de positionnement (par satellite par exemple) comprenant une application d'aide à la navigation, grâce à laquelle une carte **9** bidimensionnelle ou tridimensionnelle est avantageusement affichée sur l'écran du terminal **2,** avec la position de celui-ci sur la carte, éventuellement associée à un trajet programmé.

Le système **3** est configuré pour permettre, à partir d'une prise de vue contenant un objet identifiable par le système **3,** le guidage du terminal **2** vers un lieu associé à cet objet. Cette procédure de guidage peut comprendre l'affichage des coordonnées du lieu sur le terminal, ou le guidage vers le lieu depuis le serveur **7** de localisation.

Par « *guidage* » on désigne ici l'information sur l'existence d'un lieu associé audit objet, cette information se présentant sous diverses formes : overlay de l'objet sur une carte à l'emplacement dudit lieu, affichage de l'adresse dudit lieu, affichage d'un ou plusieurs trajets et temps de parcours entre l'emplacement du terminal et ledit lieu.

Une session média est tout d'abord établie **(101),** suivant un protocole avantageusement « temps réel » (par exemple RTP ou H324m), entre le terminal 2 et le système 3 de communication, et plus précisément entre le terminal **2** (à l'initiative de celui-ci) et le serveur média **4.**

Au cours de la session média établie entre le terminal **2** et le serveur média **4,** une prise de vue (vidéo, photographie) est réalisée à partir du terminal **2,** laquelle prise de vue inclut un objet susceptible d'être identifié par le système **3.**

La prise de vue est transmise **(102),** en temps réel, par le terminal **2** au serveur média **4.**

Dès réception, le serveur média **4** isole la prise de vue et, éventuellement après décompression, la transmet **(103)** au serveur **5** d'applications vidéo pour analyse.

Grâce à sa fonctionnalité de réalité augmentée, le serveur **5** d'applications vidéo effectue alors, en « temps réel », une analyse **(104)** de la prise de vue pour y détecter la présence d'un objet dont une image serait disponible dans la base de données **6.**

Le serveur **6** d'applications vidéo est, en outre, agencé pour effectuer une reconnaissance d'objets 3D à partir d'une pluralité de prises de vue (notamment prises à partir de points de vue différents) pour y détecter au moins un objet 3D.

Lorsqu'un tel objet a été identifié grâce à son image, le serveur **5** d'applications vidéo extrait de la base de données **6** les coordonnées géographiques du lieu (ou des lieux) associé(s) à cet objet, et les transmet **(105)** au serveur **7** de localisation. Le serveur **7** de localisation prend en compte (par exemple après l'avoir déterminée) la localisation du terminal **2** et sélectionne le lieu en fonction de celle-ci. Lorsque plusieurs lieux correspondent à un même objet dans la base de données **6,** la sélection peut consister à choisir le lieu le plus proche de la localisation du terminal **2.**

Le serveur **7** de localisation transmet alors **(106)** les coordonnées du lieu sélectionné au terminal **2,** ou initialise directement la procédure de guidage en fonction de la localisation du terminal **2.**

Selon une première possibilité, semi-automatique, les coordonnées du lieu sélectionné sont transmises puis simplement affichées sur le terminal **2,** l'opportunité d'activer la procédure de guidage sur celui-ci étant alors laissée à l'initiative de l'utilisateur.

Selon une deuxième possibilité, automatique, en même temps que la transmission des coordonnées du lieu sélectionné, le serveur **7** de localisation active à distance sur le terminal **2** l'application de navigation du système de positionnement pour permettre un guidage vers le lieu.

Selon une troisième possibilité, automatique également, les coordonnées du lieu sélectionné ne sont pas transmises au terminal **2,** le système **3** de communication gérant l'application du système de positionnement à distance en fonction de la localisation du terminal **2.**

A cet effet, l'application de navigation prend en compte la position actuelle du terminal **2,** et élabore un trajet reliant cette position et le lieu sélectionné.

Le trajet ainsi élaboré peut être simplement affiché sur la carte **9** à l'écran **8** du terminal **2.** En variante, l'application de navigation entame directement une procédure de guidage du terminal **2** jusqu'au lieu sélectionné, suivant le trajet ainsi élaboré.

La localisation du terminal est obtenue, selon diverses possibilités, par une technique de géo-localisation basée :
- sur des paramètres pris séparément ou en combinaison du canal de propagation ;
- et/ou sur la signature spatiale de l'environnement du terminal.

Dans certaines mises en oeuvre, dans une première étape, une estimation est effectuée d'un ou plusieurs paramètres, en différents points de réception, ces paramètres étant par exemple la puissance reçue, le temps d'arrivé (ou écart entre les temps d'arrivée), la direction(s) d'arrivée, ou direction(s) de départ d'au moins un signal émis par le terminal mobile. Dans une deuxième étape, une reconstitution géométrique du point d'émission (c.à.d. du terminal mobile) est effectuée sur la base d'une intersection de direction(s) (de départ et/ou d'arrivée) et/ou de cercle(s) (à puissance reçue constante, à temps d'arrivée constant par exemple).

Dans d'autres mises en oeuvre, dans une première étape, un apprentissage est effectué par modélisation théorique et/ou par mesures expérimentales d'au moins une signature (puissance, temps d'arrivée, étalement de retard, polarisation, nombre de signaux, directions d'arrivée et/ou de départ par exemple) du signal sur un maillage de l'environnement de localisation. Dans une deuxième étape, une comparaison est effectuée, par exemple par corrélation, entre la signature et des signatures préétablies.

Dans une mise en oeuvre, la localisation du terminal, notamment à l'intérieur d'un bâtiment, est assurée à l'aide de petites cellules telle que par exemple femtocell lightRadio™ de la demanderesse.

L'objet capté par la caméra du terminal est avantageusement choisi dans le groupe comprenant les codes barres et autres codes en une dimension délivrant une information, les tags, (code QR (quick response), datamatrix, microsofttag) et autres codes en deux dimensions, les images telles que publicités extérieures, publicité imprimées dans les magazines, publicités diffusées sur écran, les sons.

La capture (prise de vue) peut être effectuée par photographie.

Avantageusement, il n'est pas nécessaire de réaliser une photographie, et il suffit d'orienter la caméra vers l'image qui intéresse l'utilisateur, par exemple le logo d'une entreprise ou d'une institution.

Le procédé et le système qui viennent d'être décrits peuvent être employées à des fins de communication mobile géo-localisé, en particulier de marketing mobile géo-localisé.

Dans la description suivante d'une application de marketing mobile géo-localisé :
- le terme « *enseigne* » désigne une appellation ou un signe sous lequel communique une entreprise, une association, ou tout autre groupement, pour des produits ou des services. Par exemple, l'enseigne est un logo d'une marque ;
- l'expression « *point de vente* » désigne un emplacement physique où sont présentés les produits, les services de l'enseigne ;
- l'expression « *offre* » désigne une information liée à un point de vente. Par exemple, l'offre est commerciale (promotion, bon cadeau, coupons, carte de fidélité, crédit).

Les caractéristiques des points de vente, en particulier leur localisation géographique, sont importées dans une base de données, en tant que point d'intérêt (POI, *Point Of Interest*).

Les offres sont importées dans une base de données, par exemple sous la forme d'un patron de mise en page (*template*) où sont placés les images et le texte des offres.

Dans une mise en oeuvre, lors du lancement de la campagne marketing, une notification est envoyée aux terminaux mobiles. Cette notification est par exemple une notification poussée vers un smartphone, un SMS, un MMS, un courrier électronique.

Avantageusement, cette notification est adressée aux terminaux en tenant compte du profil de l'utilisateur du terminal mobile.

Dans une mise en oeuvre, cette notification est adressée aux terminaux mobiles se trouvant dans une zone géographique déterminée, par gardiennage virtuel (*geofencing*).

Avantageusement, cette notification incite l'utilisateur du terminal mobile à accéder à l'application dédiée, lui permettant de prendre connaissance des offres en cours et de les stocker dans une liste dédiée.

Lorsque l'utilisateur effectue une prise de vue dans l'environnement du terminal mobile, une analyse de la prise de vue est effectuée, pour y détecter la présence d'un objet tel qu'un tag, un code barre. Lorsqu'un objet tel qu'un tag ou un code barre a été identifié par son image, l'application identifie au moins un point de vente associé audit tag.

Avantageusement, la localisation du terminal mobile est alors prise en compte et l'offre affichée sur le terminal mobile sera différente suivant la localisation du terminal mobile.

Avantageusement, à l'affichage sur le terminal apparaît un point de vente, et une information, par exemple information promotionnelle ou contenu communautaire.

Avantageusement, à l'affichage sur le terminal mobile apparaît l'adresse du point de vente, en superposition d'une carte et/ou d'un itinéraire.

Avantageusement, un back end de l'application assure la gestion des points d'intérêt. Une mise à jour des POI peut ainsi être effectuée pour l'enseigne. Cette mise à jour peut consister :
- à l'ajout, au retrait d'un POI ;
- à l'ajout, au retrait ou à la modification d'une offre liée à un ou des POI ;
- à la modification des informations liées aux POI, par exemple heures d'ouverture, numéro de téléphone, adresse électronique.

A l'aide de ce back end, les notifications adressées aux terminaux mobiles peuvent être actualisées facilement.

Le procédé et le dispositif trouvent des applications dans le marketing mobile géo-localisé dans les centres commerciaux, les gares et les aéroports, des balises permettant une localisation des terminaux mobiles à l'intérieur de bâtiments.

Avantageusement, lorsque l'utilisateur approche du POI, des informations apparaissent à l'écran du terminal mobile, en réalité augmentée. Ces informations sont par exemple des offres promotionnelles (coupons).

Le procédé et le système qui viennent d'être décrits offrent de nombreux avantages.

Ils permettent d'ajouter une dimension informative et sociale à l'environnement. Avantageusement, les éléments d'informations sont fournis au terminal en réalité augmentée, les POI (*Point of Interest*) étant les lieux associés à la localisation du terminal, pour l'objet visuel ou sonore capté par la caméra ou le micro du terminal.

Le procédé et le système selon l'invention permettent d'adresser des offres promotionnelles (par exemple des coupons, bons de réduction, points de fidélité, cartes mixtes pouvant être utilisées en cartes de crédit et cartes bancaires) correspondant au profil de l'utilisateur, l'utilisateur signalant lui-même un centre d'intérêt.

En variante, lorsque l'objet est par exemple un tag scanné par le terminal, le terminal peut être utilisé pour le paiement d'un article associé au tag.

En variante, lorsque l'objet est scanné par le terminal, l'utilisateur peut voter en ligne, réserver en ligne, acheter en ligne, ou se rendre à un bureau de vote, lieu associé à l'objet scanné.

Le procédé et le système selon l'invention permettent également d'adresser des informations a priori pertinentes et intéressantes pour l'utilisateur, sous la forme de conseils, suggestions, renseignements relatifs à un produit, un service, une personne, une entreprise, un site.

Le procédé et le système selon l'invention permettent en outre la découverte, par l'utilisateur, de produits, services et sites présentant des traits communs à ce qui a attiré son attention. Un site touristique pourra ainsi être découvert de manière plus adaptée aux gouts de l'utilisateur.

Lorsque l'objet est diffusé dans un contenu média, par exemple sur internet ou dans un programme télévisé, le procédé et le système selon l'invention permettent des applications ludiques. En plus d'un lieu associé à l'objet scanné (cet objet étant par exemple un tag), l'utilisateur se verra proposé un contenu média contenant un quizz ou un jeu évènementiel.

À titre d'exemple, un utilisateur peut photographier ou filmer un logo désignant une société ou une marque de fabrique et le transmettre au système **3,** qui extrait de la base de données **6** l'adresse de la société ou du distributeur de la marque le plus proche de la localisation du terminal **2.** Lorsque la prise de vue est une vidéo, elle est découpée image par image, puis chaque image est comparée avec les images de la base de données **6,** au moyen d'une technique de reconnaissance d'image.

## Revendications

1. Procédé de communication comprenant les opérations suivantes :
- réalisation par un terminal **(2)** mobile d'une prise de vue dans l'environnement du terminal **(2) ;**
- analyse de la prise de vue, pour y détecter la présence d'un objet ;
- lorsqu'un objet a été identifié par son image, identification d'au moins un lieu associé audit objet ;
- parmi plusieurs lieux associés à l'objet, sélection du lieu le plus proche de la localisation du terminal ;
- affichage sur le terminal du lieu sélectionné et d'une information associée à l'objet.

2. Procédé selon la revendication 1, **caractérisé en ce que** l'objet identifié est choisi dans le groupe comprenant les codes barres, les tags, les publicités extérieures, les publicités imprimées dans les magazines, les publicités diffusées sur écran.

3. Procédé selon la revendication 1 ou la revendication 2, **caractérisé en ce que** l'affichage sur le terminal d'au moins un lieu associé à l'objet est réalisé en réalité augmentée.

4. Procédé selon l'une quelconque des revendications 1 à 3, **caractérisé en ce qu'**il comprend une étape d'activation d'une procédure de guidage à partir de ladite localisation jusqu'à au moins un lieu associé audit objet.

5. Procédé de communication selon l'une quelconque des revendications 1 à 4, comprenant les opérations suivantes :
- établissement d'une session média entre le terminal mobile (2) et un système (3) de communication distant ;
- transmission de la prise de vue par le terminal (2) mobile au système (3) de communication au cours de la session média ;
- analyse de la prise de vue, au sein du système (3) de communication, pour y détecter la présence dudit objet.

6. Système **(3)** de communication comprenant :
- une base de données **(6)** contenant une pluralité d'images à chacune desquelles est associé un lieu prédéterminé ;
- un serveur **(5)** d'applications, relié à la base de données **(6),** et configuré pour effectuer une analyse d'image d'une prise de vue reçue d'un terminal mobile **(2)** en vue d'identifier dans ladite prise de vue un objet correspondant à une image mémorisée dans la base de données **(6) ;**
- un serveur **(7)** de localisation relié au serveur **(5)** d'applications, configuré pour sélectionner parmi plusieurs lieux correspondants audit objet dans la base de données le lieu le plus proche de la localisation du terminal mobile, et pour activer une procédure d'affichage sur le terminal du lieu sélectionné et d'une information associé à l'objet.

7. Système de communication selon la revendication 6, dans lequel le serveur **(7)** de localisation est configuré pour activer à distance, dans le terminal **(2),** une application de navigation d'un système de positionnement par satellite implémenté dans le terminal **(2).**

8. Système de communication selon la revendication 6 ou la revendication 7, **caractérisé en ce qu'**il comprend un réseau de petites cellules pour la localisation de terminaux mobiles, notamment à l'intérieur de bâtiments.

## Patentansprüche

1. Kommunikationsverfahren, die folgenden Schritte umfassend:
- Durchführung, über ein mobiles Endgerät **(2),** einer Aufnahme in der Umgebung des Endgeräts **(2);**
- Analyse der Aufnahme, zum Erfassen eines Objekts;
- wurde ein Objekt durch sein Bild identifiziert, Identifizierung von mindestens einem mit diesem Objekt in Verbindung stehenden Ort;
- unter mehreren mit dem Objekt in Verbindung stehenden Orten, Auswahl des Ortes, der der Lokalisierung des Endgeräts am nächsten liegt;
- Anzeige, auf dem Endgerät, des ausgewählten Ortes und einer mit dem Objekt in Verbindung stehenden Information.

2. Verfahren nach Anspruch 1, **gekennzeichnet dadurch, dass** das identifizierte Objekt ausgewählt wird in der Gruppe, die die Strichcodes, die Tags, die externen Anzeigen, die in Magazinen gedruckten Anzeigen, die auf den Bildschirmen übertragenen Anzeigen umfasst.

3. Verfahren nach Anspruch 1 oder Anspruch 2, **gekennzeichnet dadurch, dass** die Anzeige auf dem Endgerät von mindestens einem mit dem Objekt in Verbindung stehenden Ort in erweiterter Realität umgesetzt wird.

4. Verfahren nach einem beliebigen der Ansprüche 1 bis 3, **gekennzeichnet dadurch, dass** ein Aktivierungsschritt eines Führungsvorgangs ab der besagten Lokalisierung bis mindestens zu einem mit dem Objekt in Verbindung stehenden Ort beinhaltet ist.

5. Kommunikationsverfahren nach einem beliebigen der Ansprüche 1 bis 4, die folgenden Schritte umfassend:
- Aufbau einer Media Session zwischen dem mobilen Endgerät (2) und einem Fernkommunikationssystem (3);
- Übertragung der Aufnahme durch das mobile Endgerät (2) zum Kommunikationssystem (3) während der Media Session;
- Analyse der Aufnahme, innerhalb des Kommunikationssystems (3), zum Erfassen des besagten Objekts.

6. Kommunikationssystem **(3),** umfassend:
- eine Datenbank **(6)** mit einer Vielzahl an Bildern, die jeweils mit einem festgelegten Ort in Verbindung stehen;
- einen Anwendungsserver **(5),** mit der Datenbank **(6)** verbunden, und konfiguriert für die Durchführung einer Bildanalyse einer Aufnahme, die er erhält von einem mobilen Endgerät **(2)** zur Identifizierung, auf der besagten Aufnahme, eines Objekts, das einem in der Datenbank **(6)** gespeicherten Bild entspricht:
- einen mit dem Anwendungsserver **(5)** verbundener Standortserver **(7),** der konfiguriert ist
um unter mehreren Orten, die
dem besagten Objekt in der Datenbank entsprechen, den Ort auszuwählen, der der Lokalisierung des mobilen Endgeräts am nächsten liegt,
und um ein Anzeigeverfahren, auf dem Endgerät, des ausgewählten Ortes und der mit dem Objekt verbundenen Information zu aktivieren.

7. Kommunikationssystem nach Anspruch 6, in dem der Standortserver **(7)** konfiguriert ist für die Aktivierung auf Distanz, im Endgerät **(2),** einer Navigationsanwendung eines Global Positioning System (GPS), das auf dem Endgerät (2) implementiert ist.

8. Kommunikationssystem gemäß Anspruch 6 oder Anspruch 7, **gekennzeichnet dadurch, dass** es ein Netz aus kleinen Zellen für die Lokalisierung mobiler Endgeräte, insbesondere im Inneren von Gebäuden, umfasst.

## Claims

1. A communication method comprising the following operations:
- capturing by a mobile terminal **(2)** of a view in the environment of the terminal **(2);**
- analyzing the captured view, to detect therein the presence of an object;
- when an object has been identified by its image, identifying at least one place associated with said object;
- among multiple places associated with the object, selecting the place closest to the location of the terminal;
- displaying on the terminal the selected place and an item of information associated with the object.

2. A method according to claim 1, **characterized in that** the identified object is chosen from a group comprising bar codes, tags, outdoor advertisements, advertisements printed in magazines, and advertisements broadcast on a screen.

3. A method according to claim 1 or claim 2, **characterized in that** the displaying on the terminal of at least one place associated with the object is conducted as augmented reality.

4. A method according to one of the claims 1 to 3, **characterized in that** it comprises a step of activating a guidance procedure from said location to at least one place associated with said object.

5. A communication method according to one of the claims 1 to 4, comprising the following operations:
- establishing a media session between the mobile terminal (2) and a remote communication system (3);
- transmitting the captured view, by the mobile terminal (2) to the communication system (3) during the media session;
- analyzing the captured view, within the communication system, to detect therein the presence of said object.

6. A communication system **(3)** comprising:
- a database **(6)** containing a plurality of images, each of which is associated with a predetermined place;
- an application server **(5)** connected to the database **(6),** and configured to conduct an image analysis of a captured view received from a mobile terminal **(2)** in order to identify within said captured view an object corresponding to an image saved in the database **(6);**
- a location server **(7)** connected to the application server **(5),** configured to select from among multiple places corresponding to said object in the database the place closest to the location of the mobile terminal,
- and to activate a procedure for displaying on the terminal the selected location and an item of information associated with the object.

7. A communication system according to claim 6, wherein the location server (7) is configured to remotely activate, in the terminal **(2),** a satellite positioning system navigation application implemented in the terminal **(2).**

8. A communication system according to claim 6 or claim 7, **characterized in that** it comprises a network of small cells for locating mobile terminals, particularly inside buildings.
